# EUROPEAN PATENT APPLICATION

(11) **EP 2 175 615 A1**
(43) Date of publication of application: **14.04.2010**
(21) Application number: 09170797.6
(22) Date of filing: 21.09.2009
(51) Int. Cl.: H04L 29/08, H04L 12/18

(54) **Method and apparatus for transmitting/receiving broadcast data through peer-to-peer network**

(30) Priority: 09.10.2008 US 104026 P; 24.11.2008 US 117272 P; 13.01.2009 KR 20090002729
(71) Applicant: SAMSUNG ELECTRONICS CO., LTD., Suwon-si Gyeonggi-do 442-742 (KR)
(72) Inventor: Kwon, O-hoon, Gyeonggi-do (KR); Lee, Sang-kwon, Gyeonggi-do (KR); Im, Sung-bin, Gyeonggi-do (KR); Zhang, Guanhua, Gyeonggi-do (KR); Yu, Hee-seok, Gyeonggi-do (KR)
(74) Representative: Davies, Robert Ean

(57) **Abstract**

Provided are a method and apparatus for transmitting/receiving broadcast data via a peer-to-peer (P2P) network, in which information regarding a list of a plurality of pieces of broadcast content that are broadcast via one broadcast channel is provided to a server in the P2P network, and the broadcast data is transmitted/received according to the provided list.

## Description

Methods and apparatuses consistent with the present invention relate to transmitting/receiving broadcast data, and more particularly, to a method and apparatus for allowing a peer in a peer-to-peer (P2P) network to transmit broadcast data to another peer in the same network.

Advances in internet protocol (IP)-based wired/wireless network technology have led to the development of methods of transmitting/receiving broadcast data, for example, in an IP television (IPTV) via an IP network.

In particular, in an IP network, a client, e.g., an Internet personal broadcasting station, normally transmits broadcast data to other clients, and thus, much attention has been paid to a method and apparatus for allowing an individual person to transmit/receive broadcast data.

A peer-to-peer (P2P) network is used for a client who has a limited amount of hardware and network resources to smoothly transmit or receive data. The P2P network is an overlay network that constitutes a logical network within an IP network. The P2P network does not involve the concept of clients or servers but instead, involves a plurality of nodes, i.e., peers, which participate in the P2P network and simultaneously function as both clients and servers, as network entities at the same hierarchical level. Each peer in the P2P network transmits received data to other peers, thereby preventing an increase in load on each peer. Accordingly, the P2P network can be used for personal broadcasting.

Exemplary embodiments of present invention provide a method and apparatus for transmitting/receiving broadcast data via a peer-to-peer (P2P) network.

Exemplary embodiments of present invention also provide a computer readable recording medium having recorded thereon a computer program for executing the method.

According to an aspect of the present invention, there is provided a method of allowing a first peer to transmit broadcast data via a P2P (peer-to-peer) network, the method including generating information regarding a broadcast channel; transmitting the information regarding the broadcast channel to a server in the P2P network; and transmitting broadcast data to peers in the P2P network according to the information regarding the broadcast channel, wherein the information regarding the broadcast channel includes information regarding a list of a plurality of pieces of broadcast content that are broadcast via the broadcast channel.

The information regarding the list of the pieces of the broadcast content may include information regarding a broadcast schedule of the pieces of the broadcast content.

The information regarding the broadcast schedule may include meta data of each of the pieces of the broadcast content.

The meta data may include information regarding a representative image and a length of each of the pieces of the broadcast content.

The information regarding the broadcast channel may include at least one of a name of the broadcast channel, information regarding types of the pieces of the broadcast content, a starting time of each of the pieces of the broadcast content, and information regarding the first peer generating the broadcast channel.

The method may further include changing the information regarding the broadcast channel during the transmission of the broadcast data; transmitting the changed information to a server in the P2P network; and transmitting the broadcast data to the peers in the P2P network according to the changed information, wherein the server transmits the changed information to the peers in the P2P network.

According to another aspect of the present invention, there is provided a method of allowing a first peer to receive broadcast data via a P2P network, the method including receiving information regarding a broadcast channel of a second peer from a server in the P2P network; and receiving the broadcast data of the broadcast channel from peers in the P2P network according to the information regarding the broadcast channel, wherein the information regarding the broadcast channel includes information regarding a list of a plurality of pieces of broadcast content broadcast via the broadcast channel.

The method may further include receiving the information regarding the broadcast channel, which is changed during the receiving of the broadcast data, from the server; and receiving the broadcast data from the peers in the P2P network according to the changed information regarding the broadcast channel, wherein the changed information is transmitted from the second peer to the server.

The receiving of the broadcast data may include scheduling receiving of the broadcast data according to the information regarding the broadcast channel; and receiving the broadcast data as scheduled.

According to another aspect of the present invention, there is provided an apparatus for transmitting broadcast data via a P2P network, the apparatus including a broadcast information generation unit generating information regarding a broadcast channel; a broadcast information transmission unit transmitting the information regarding the broadcast channel to a server in the P2P network; and a broadcast data transmission unit transmitting broadcast data to peers in the P2P network according to the information regarding the broadcast channel, wherein the information regarding the broadcast channel includes information regarding a list of a plurality of pieces of broadcast content that are broadcast via the broadcast channel.

According to another aspect of the present invention, there is provided an apparatus for allowing a first peer to receive broadcast data via a P2P network, the apparatus including a broadcast information receiving unit receiving information regarding a broadcast channel of a second peer from a server in the P2P network; and a broadcast data receiving unit receiving the broadcast data of the broadcast channel from peers in the P2P network according to the information regarding the broadcast channel, wherein the information regarding the broadcast channel includes information regarding a list of a plurality of pieces of broadcast content broadcast via the broadcast channel.

According to another aspect of the present invention, there is provided a computer readable recording medium having recorded thereon a computer program for executing the method of transmitting broadcast data or the method of receiving broadcast data.

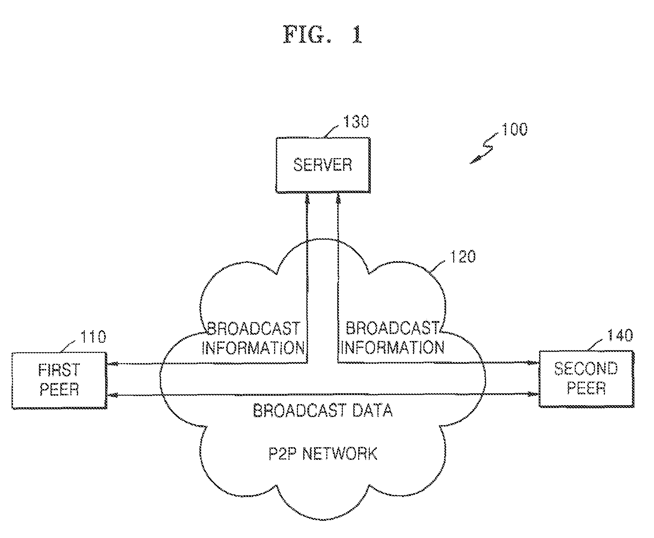

For a better understanding of the invention, and to show how embodiments of the same may be carried into effect, reference will now be made, by way of example, to the accompanying diagrammatic drawings in which:FIG. 1 is a block diagram of a system for transmitting/receiving broadcast data via a peer-to-peer (P2P) network according to an exemplary embodiment of the present invention;

FIG. 2 is a flowchart of a method of transmitting/receiving broadcast data according to an exemplary embodiment of the present invention;

FIG. 3A is a diagram of a user interface containing information regarding a broadcast channel according to an exemplary embodiment of the present invention;

FIG. 3B is a diagram of a user interface containing information regarding broadcast channels in a P2P network according to an exemplary embodiment of the present invention;

FIG. 4 illustrates an XML (eXtensible Markup Language) document containing information regarding broadcast channels according to an exemplary embodiment of the present invention;

FIG. 5 is a diagram illustrating a method of changing a broadcast schedule according to an exemplary embodiment of the present invention;

FIG. 6 is a block diagram of a peer that transmits broadcast data according to an exemplary embodiment of the present invention;

FIG. 7 is a block diagram of a server that manages broadcasting in a P2P network according to an exemplary embodiment of the present invention; and

FIG. 8 is a block diagram of a peer that receives broadcast data according to an exemplary embodiment of the present invention.

Hereinafter, exemplary embodiments of the present invention will be described in detail with reference to the accompanying drawings.

FIG. 1 is a block diagram of a system 100 for transmitting/receiving broadcast data via a peer-to-peer (P2P) network 120 according to an exemplary embodiment of the present invention. Referring to FIG. 1, a first peer 110 transmits broadcast data to other peers participating in the P2P network 120, and a second peer 140 receives the broadcast data from the first peer 110 via the P2P network 120. Hereinafter, peers that participate in the P2P network are assumed to be consumer electronics (CE).

During broadcast communication established via the P2P network according to a conventional method, the first peer 110 generates a broadcast channel and transmits broadcast data to other peers but does not provide the other peers with information regarding the broadcast channel. Thus, the other peers receiving the broadcast data cannot determine the type of the broadcast data prior to receiving the broadcast data from the first peer 110.

However, according to the current exemplary embodiment, the first peer 110 provides a server 130 with the information regarding the broadcast channel of the first peer 110, and the server 130 transmits the information regarding the broadcast channel to the other peers in the P2P network 120. Thus, the other peers can check the information regarding the broadcast channel before receiving the broadcast data.

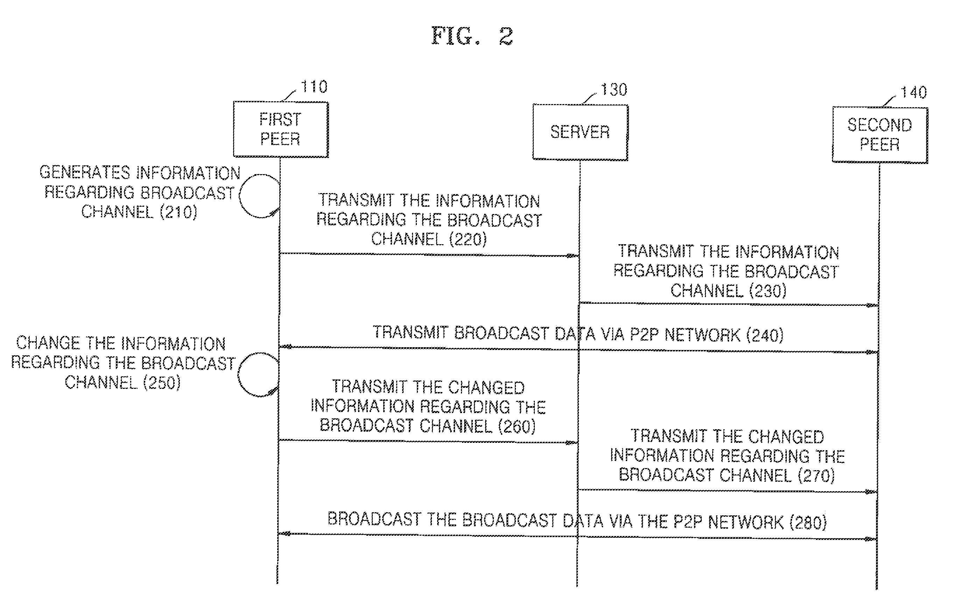

In other words, the first peer 110 may provide the server 130 with a list of at least one piece of content that is broadcast via the broadcast channel, and the second peer 140 may selectively receive the broadcast from the first peer 110 after checking the list of the at least one piece of content, which is received from the server 130, as will be described below in detail with reference to FIG. 2.

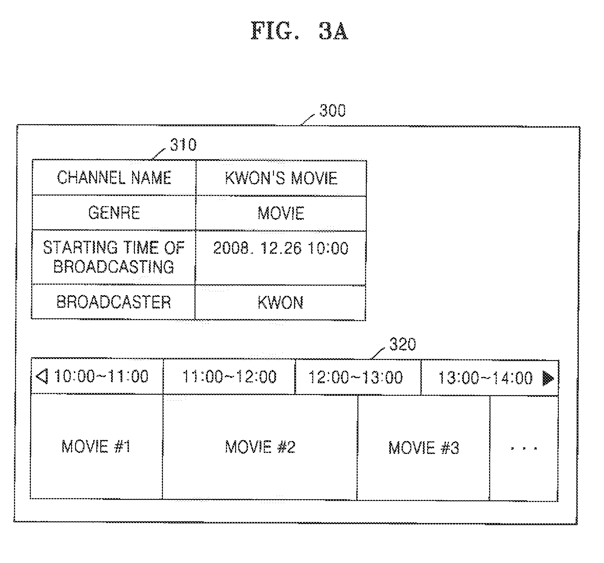

FIG. 2 is a flowchart of a method of transmitting/receiving broadcast data according to an exemplary embodiment of the present invention. Referring to FIG. 2, in operation 210, the first peer 110 generates information regarding a broadcast channel thereof. The information regarding the broadcast channel may include information for identifying the broadcast channel of the first peer 110, and information regarding a list of content that is broadcast via the broadcast channel, as will be described below in detail with reference to FIG. 3A.

FIG. 3A is a diagram of a user interface 300 containing information regarding a broadcast channel, for example, of the first peer of FIG. 1, according to an exemplary embodiment of the present invention. Referring to FIG. 3A, the information regarding the broadcast channel includes broadcast channel identification information 310 that specifies at least one of the name of the broadcast channel, a broadcast genre, a broadcast starting time, and a broadcaster who generates the broadcast channel.

According to an exemplary embodiment of the present invention, the server 130 of FIG. 1 manages information regarding all broadcast channels in a P2P network. Thus, the information regarding the broadcast channel of the first peer 110 contains information regarding the name of the broadcast channel so that the broadcast channel of the first peer 110 can be differentiated from broadcast channels of other peers in the P2P network.

The information regarding the broadcast channel further includes a list of at least one piece of content that is broadcast via the broadcast channel of the first peer 110. According to an exemplary embodiment of the present invention, the first peer 110 may provide a plurality of pieces of content via one broadcast channel, and peers receiving broadcast data may check information regarding the pieces of the content and selectively receive desired content from among the pieces of the content.

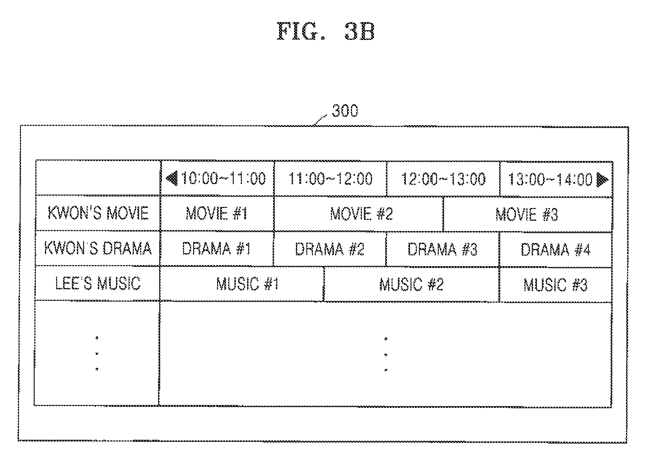

Thus, the first peer 110 transmits information regarding a list of the pieces of the content to the server 130. In addition, a schedule for broadcasting the pieces of the content may be provided to the server 130 as illustrated in FIG. 3B.

The information regarding the list of the pieces of the content may include meta data regarding the respective pieces of the content. The meta data specifies the names and lengths of the respective pieces of the content. The meta data may further include information regarding a representative image of each piece of the content in order to more intuitively provide peers with the information regarding the content. The representative images of the respective pieces of the content are included in the meta data so that peers receiving broadcast data may display the pieces of the content in the form of thumbnail images.

Referring back to FIG. 2, in operation 220, the first peer 110 transmits the information regarding the broadcast channel of the first peer 110, which was generated in operation 210, to the server 130. As described above, the server 130 manages information regarding all broadcast channels in the P2P network.

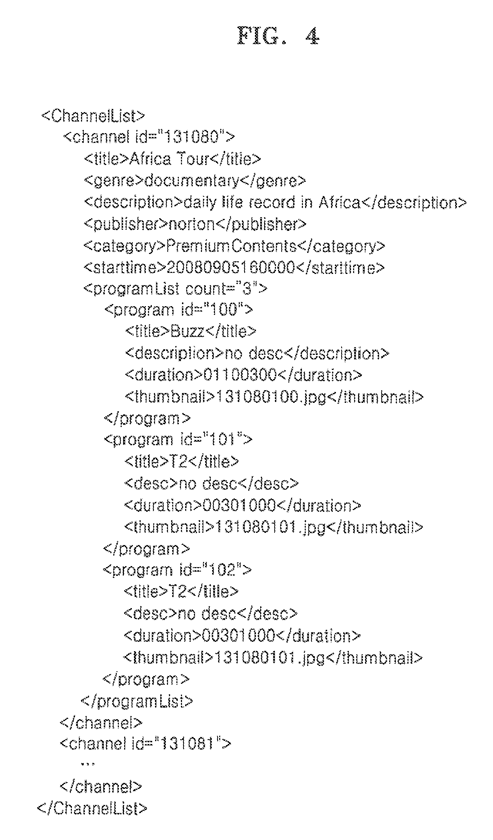

FIG. 4 illustrates an XML (eXtensible Markup Language) document containing information regarding broadcast channels according to an exemplary embodiment of the present invention. Referring to FIG. 4, the information regarding the broadcast channel that is transmitted to the server 130 in operation 220 of FIG. 2, may be transmitted using an XML document. Referring to FIG. 4, as described above, the information regarding the broadcast channel, which is transmitted to the server 130, includes broadcast channel identification information and a list of at least one piece of content that is broadcast via the broadcast channel.

Information contained in respective tags 'channel id', 'title', 'genre', 'description', 'publisher', 'category' and 'starttime' are used to identify a broadcast channel. Information contained in a tag 'programList' is related to the list of the broadcast content.

The tag 'channel id' includes information regarding a channel identifier. The tag 'title' indicates the name of the broadcast channel. The tag 'genre' indicates the genres of the broadcast content. The tag 'description' specifies the broadcast channel. The tag 'publisher' includes information regarding a broadcaster. The tag 'category' indicates the category to which the broadcast channel belongs. The 'starttime' indicates a starting time of the content.

The list of the at least one broadcast content includes meta data of the content. The meta data includes tags 'title', 'description', 'duration' and 'thumbnail'.

The tag 'title' indicates the title of the content. The tag "description' provides a detailed description of the content. The tag 'duration' indicates the length of the content. The tag 'thumbnail' includes information regarding a representative image of the content.

Referring back to FIG. 2, in operation 230, the server 130 provides the second peer 140 with the information regarding the broadcast channel of the first peer 110 that was received from the first peer 110 in operation 220. The server 130 shares the information regarding the broadcast channel of the first peer 110 with the other peers in the P2P network. Upon receiving the information regarding the broadcast channel of the first peer 110 from the first peer 110, the server 130 may share it with the other peers by broadcasting this information to the other peers. Otherwise, the server 130 may share the information regarding the broadcast channel of the first peer 110 with the other peers by including this information in information regarding the broadcast channels in the P2P network, which is periodically broadcast to all the peers in the P2P network. Such a sharing will now be described in detail with reference to FIG. 3B.

FIG. 3B is a diagram of a user interface 340 containing information regarding broadcast channels in the P2P network 120 of FIG. 1 according to an exemplary embodiment of the present invention. Referring to FIGS. 2 and 3B, the server 130 provides information regarding at least one broadcast channel that peers in the P2P network 120 can use. Referring to the user interface 340, the server 130 provides the information regarding the at least one broadcast channel, and a broadcasting schedule of broadcast channels.

Since information regarding a plurality of pieces of content that are respectively broadcast via the broadcast channels is provided to the second peer 140, the second peer 140 may select and view at least one of a plurality of pieces of content that are broadcast via the broadcast channel of the first peer 110. Also, the second peer 140 may make its own viewing schedule on, for example, a TV from a combination of a plurality of pieces of content that are broadcast via a plurality of broadcast channels. For example, the second peer 140 may make its own viewing schedule so that MOVIE #1 may be viewed from ten o'clock to eleven o'clock, DRAMA #2 and DRAMA #3 may be viewed from eleven o'clock to one o'clock, and MUSIC #3 may be viewed from one o'clock.

In operation 240, the first peer 110 transmits broadcast data to the other peers in the P2P network 120, based on the information regarding the broadcast channel that was transmitted to the server 130 in operation 220. In this case, broadcast data regarding a plurality of pieces of content may be transmitted to the other peers at a predetermined time. The second peer 120 may either directly receive the broadcast data from the first peer 110 or receive the broadcast data from peers that received the broadcast data in a P2P mesh network.

As described above with reference to FIG. 3B, the second peer 120 may schedule receiving of broadcast data according to the information regarding the broadcast channels, and receive the broadcast data as scheduled. In other words, the second peer 120 may schedule receiving of broadcast data of content that has yet to be broadcast in order to receive the broadcast data the moment broadcasting of the content begins.

Operations 220 to 240 have been described above, in which broadcast data is transmitted and received based on the information regarding the broadcast channel of the first peer 110. In operations 250 to 280, a method of transmitting and receiving the broadcast data when the information regarding the broadcast channel is changed after the broadcasting of the content begins, is described.

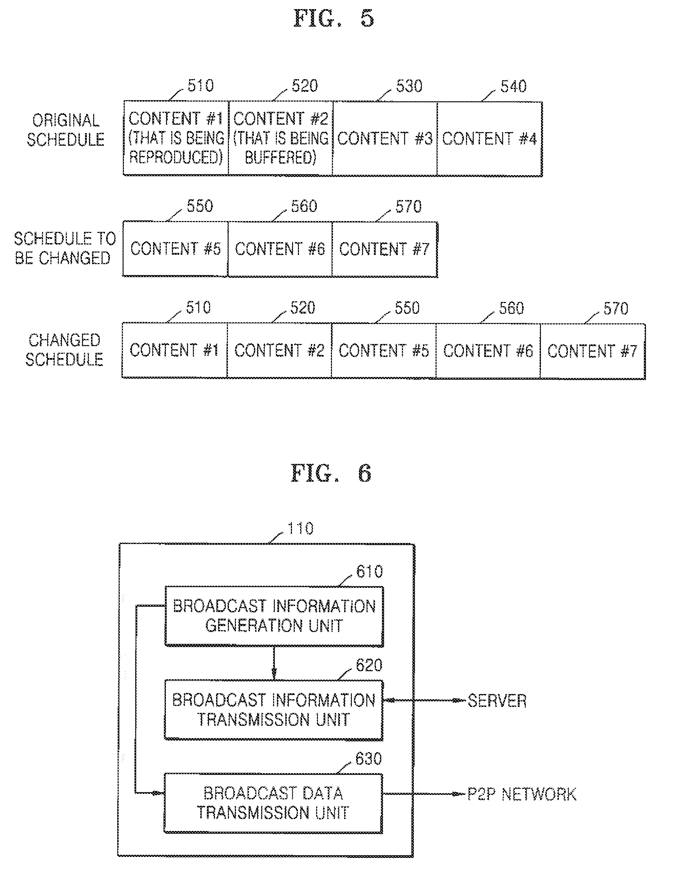

Specifically, in operation 250, during the transmitting of the broadcast data, the first peer 110 changes the information regarding the broadcast channel according to the information regarding the broadcast channel that was generated in operation 220. In this case, a broadcast schedule is changed by deleting or modifying content that is to be broadcast or changing the order in which a plurality of pieces of content will be broadcast. The information regarding the broadcast channel is considered as being changed even if there is no modification to the original broadcast schedule although a new piece of broadcast content is simply added to the broadcast schedule. However, if the first peer 110 changes the broadcast schedule without notice, the second peer 140 may no longer be capable of viewing content that it is currently viewing. Thus, the broadcast schedule is preferably changed according to predetermined rules, as will now be described in detail with reference to FIG. 5.

FIG. 5 is a diagram illustrating a method of changing a broadcast schedule according to an exemplary embodiment of the present invention. It is assumed that when the first peer 110 of FIG. 1 generates the information regarding the broadcast channel thereof in operation 210, a broadcast schedule generated is the same as the original schedule illustrated in FIG. 5. According to the original schedule, content #1 510 is being reproduced by other peers in the P2P network after broadcast data of the content #1 510 was transmitted to them, and content #2 520 is being buffered to be reproduced at a later time although it has yet to be reproduced by another peer.

The content #1 510 that is being reproduced and the content #2 520 that is being buffered are not deleted, when the first peer 110 attempts to change a broadcast schedule by deleting all the content #1 510, the content #2 520, content #3 530, and content #4 540 and adding content #5 550, content #6 560 and content #7 570. Thus, the changed broadcast schedule sequentially includes the content #1 510, the content #2 520, the content #5 550, the content #6 560 and the content #7 570.

Alternatively, when all the content #1 510, the content #2 520, the content #3 530 and the content #4 540 are to be deleted from the original broadcast schedule, only the content #1 510 that is being reproduced may be retained in the changed broadcast schedule but the content #2 520 that is being buffered may be deleted.

Referring back to FIG. 2, when the information regarding the broadcast channel is changed in operation 250 as illustrated in FIG. 5, the first peer 110 transmits the changed information regarding the broadcast channel to the server 130 in operation 260. As described above with reference to FIG. 4, the changed information regarding the broadcast channel may be transmitted to the server 130 via an XML document.

In operation 270, the server 130 transmits the changed information regarding the broadcast channel, which was received in operation 260, to the second peer 140. As described above with reference to operation 230, the changed information regarding the broadcast channel may be shared with the other peers in the P2P network by broadcasting this information to the other peers as soon as this information is received from the first peer 110. Alternatively, this information may be broadcast when information regarding broadcast channels in the P2P network is periodically broadcast to all the peers in the P2P network.

In operation 280, the first peer 110 transmits the broadcast data to the other peers in the P2P network according to the changed information regarding the broadcast channel that was transmitted to the server 130 in operation 260.

FIG. 6 is a block diagram of a peer that transmits broadcast data according to an exemplary embodiment of the present invention. FIG. 6 illustrates in detail the construction of the first peer 110 of FIG. 1. Referring to FIG. 6, the first peer 110 includes a broadcast information generation unit 610, a broadcast information transmission unit 620 and a broadcast data transmission unit 630.

The broadcast information generation unit 610 generates information regarding the broadcast channel of the first peer 110. This information may include identification information of the broadcast channel of the first peer 110, and a list of content broadcast via the broadcast channel.

When the information regarding the broadcast channel is changed according to user input during transmission of broadcast data, the broadcast information generation unit 610 may also generate the changed information regarding the broadcast channel.

The broadcast information transmission unit 620 receives the information regarding the broadcast channel from the broadcast information generation unit 610 and transmits it to the server 130 in the P2P network 120. As described above with reference to FIG. 4, the information regarding the broadcast channel may be transmitted to the server 130 via an XML document. When the information regarding the broadcast channel is changed during transmission thereof from the broadcast information generation unit 610, the broadcast information generation unit 620 also transmits the changed information regarding the broadcast channel to the server 130.

The broadcast data transmission unit 630 transmits broadcast data to the other peers in the P2P network 120 according to the information regarding the broadcast channel generated by the broadcast information generation unit 610.

Broadcast data of a plurality of pieces of content may be transmitted according to a broadcast schedule contained in the information regarding the broadcast channel.

When the information regarding the broadcast channel is changed during transmission thereof, the broadcast data transmission unit 630 also transmits the broadcast data according to the changed information regarding the broadcast channel.

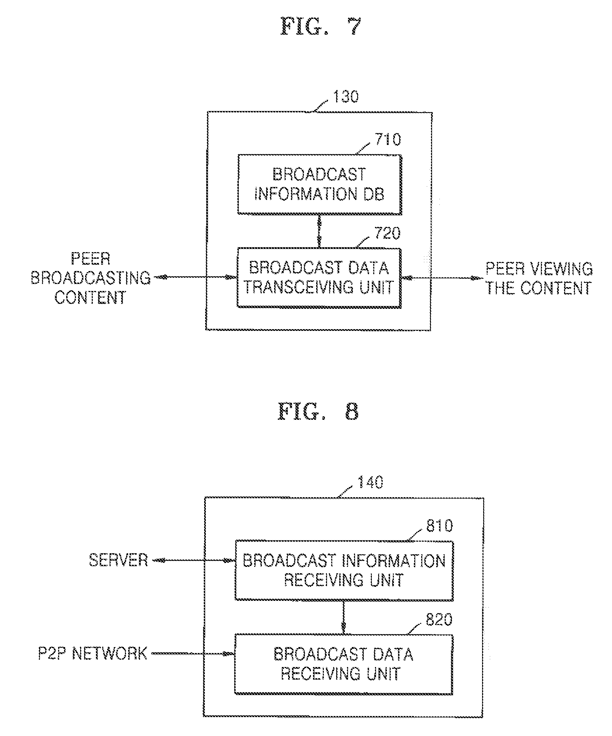

FIG. 7 is a block diagram of a server that manages broadcasting in a P2P network according to an exemplary embodiment of the present invention. FIG. 7 illustrates in detail the construction of the server 130 of FIG. 1. Referring to FIG. 7, the server 130 includes a broadcast information database (DB) 710 and a broadcast information transceiving unit 720.

The broadcast information DB 710 stores information regarding broadcast channels in the P2P network 120. The information regarding all the broadcast channels in the P2P network 120 including the broadcast channel of the first peer 110 is received from the other peers in the P2P network 120 and is stored in the broadcast information DB 710, and the received information is shared with the other peers in the P2P network 120 as described above with reference to FIG. 2.

The broadcast information DB 710 may also receive and store information regarding peers accessing the respective broadcast channels from the peers via the broadcast information transceiving unit 720. Broadcast data may be smoothly exchanged by collecting information regarding peers accessing a predetermined broadcast channel and sharing the collected information among the peers if needed.

In order to monitor all peers transmitting or receiving broadcast data in the P2P network 120, the broadcast information DB 710 may also receive information regarding the peers from the peers via the broadcast information transceiving unit 720 and store the received information. The internet protocol (IP) addresses of the peers transmitting or receiving broadcast data may be stored as information regarding the peers in the broadcast information DB 710. The broadcast information transceiving unit 720 receives the information regarding all the broadcast channels in the P2P network 120 and stores it in the broadcast information DB 710. The received information is broadcast in the P2P network 120 in order to be shared with peers that desire to receive broadcast.

When information regarding a broadcast channel is changed after broadcast content begins to be broadcast via the broadcast channel, the changed information is received from a peer transmitting broadcast data and is transmitted to a peer that is viewing the broadcast content.

As described above related to the broadcast information DB 710, the broadcast information transceiving unit 720 may receive information regarding all peers accessing the respective broadcast channels and/or information regarding all peers transmitting or receiving broadcast data in the P2P network 120, and store the received information in the broadcast information DB 710.

FIG. 8 is a block diagram of a peer that receives broadcast data according to an exemplary embodiment of the present invention. FIG. 8 illustrates in detail the construction of the second peer 140 of FIG. 1. Referring to FIG. 8, the second peer 140 includes a broadcast information receiving unit 810 and a broadcast data receiving unit 820.

The broadcast information receiving unit 810 receives information regarding broadcast channels in the P2P network 120 from the server 130. The received information also includes information regarding the broadcast channel of the first peer 110. If the information regarding the broadcast channels is changed during transmission thereof, the changed information regarding the broadcast channels is also received from the server 130.

The broadcast data receiving unit 820 receives broadcast data based on the information regarding the broadcast channels received from the broadcast information receiving unit 810. The broadcast data is received from peers in the P2P network 120. Based on the information regarding the broadcast channels, the broadcast data may be scheduled to be received before broadcasting and be received as scheduled. Also, if the information regarding the broadcast channels is changed during transmission thereof, the broadcast data is received according to the changed information regarding the broadcast channels.

According to the above exemplary embodiments, a peer that transmits broadcast data is capable of transmitting a plurality of pieces of content via one broadcast channel, thereby enabling the broadcast channel to be constructed in a consistent and effective manner. Also, a peer that receives the broadcast data is capable of dynamically scheduling viewing of broadcast content and viewing the broadcast content based on information regarding the broadcast channel, thereby enabling various broadcast content to be viewed.

An exemplary embodiment of the present invention can be embodied as computer readable code in a computer readable medium.

For example, a server, a broadcast data transmitting device and a broadcast data receiving device such as those in the above exemplary embodiments may include a bus coupled to the elements of a device as illustrated in FIGS. 6 to 8 and at least one processor coupled to the bus. Also, a memory may be coupled to the processor in order to store commands (or received or generated messages) and execute the commands as described above.

The computer readable medium may be any recording apparatus capable of storing data that is read by a computer system, e.g., a read-only memory (ROM), a random access memory (RAM), a compact disc (CD)-ROM, a magnetic tape, a floppy disk, an optical data storage device, and so on. The computer readable medium can be distributed among computer systems that are interconnected through a network, and the present invention may be stored and implemented as computer readable code in the distributed system.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of allowing a first peer to transmit broadcast data via a peer-to-peer (P2P) network, the method comprising:
generating information regarding a broadcast channel;
transmitting the information regarding the broadcast channel to a server in the P2P network; and
transmitting broadcast data to peers in the P2P network according to the information regarding the broadcast channel,
wherein the information regarding the broadcast channel comprises information regarding a list of a plurality of pieces of broadcast content that are broadcast via the broadcast channel.

2. The method of claim 1, wherein the information regarding the list of the plurality of pieces of the broadcast content comprises information regarding a broadcast schedule of the plurality of pieces of the broadcast content.

3. The method of claim 2, wherein the information regarding the broadcast schedule comprises meta data of each of the plurality of pieces of the broadcast content.

4. The method of claim 1, further comprising:
changing the information regarding the broadcast channel during the transmitting of the broadcast data;
transmitting the changed information to a server in the P2P network; and
transmitting changed broadcast data to the peers in the P2P network according to the changed information,
wherein the server transmits the changed information to the peers in the P2P network.

5. A method of allowing a first peer to receive broadcast data via a peer-to-peer (P2P) network, the method comprising:
receiving information regarding a broadcast channel of a second peer from a server in the P2P network; and
receiving the broadcast data of the broadcast channel from peers in the P2P network according to the information regarding the broadcast channel,
wherein the information regarding the broadcast channel comprises information regarding a list of a plurality of pieces of broadcast content broadcast via the broadcast channel.

6. The method of claim 5, wherein the information regarding the list of the plurality of pieces of broadcast content comprises information regarding a broadcast schedule of the plurality of pieces of the broadcast content.

7. The method of claim 6, wherein information regarding the broadcast schedule comprises meta data of the plurality of pieces of the broadcast content.

8. The method of claim 5, further comprising:
receiving changed information regarding the broadcast channel from the server during the receiving of the broadcast data; and
receiving changed broadcast data from the peers in the P2P network according to the changed information regarding the broadcast channel,
wherein the changed information is transmitted from the second peer to the server.

9. The method of claim 5, wherein the receiving of the broadcast data comprises:
scheduling receiving of the broadcast data according to the information regarding the broadcast channel; and
receiving the broadcast data according to the scheduling.

10. An apparatus for transmitting broadcast data via a peer-to-peer (P2P) network, the apparatus comprising:
a broadcast information generation unit generating information regarding a broadcast channel;
a broadcast information transmission unit transmitting the information regarding the broadcast channel to a server in the P2P network; and
a broadcast data transmission unit transmitting broadcast data to peers in the P2P network according to the information regarding the broadcast channel,
wherein the information regarding the broadcast channel comprises information regarding a list of a plurality of pieces of broadcast content that are broadcast via the broadcast channel.

11. The apparatus of claim 10, wherein the information regarding the list of the plurality of pieces of the broadcast content comprises information regarding a broadcast schedule of the plurality of pieces of the broadcast content.

12. The apparatus of claim 10, wherein the broadcast information generation unit changes the information regarding the broadcast channel during the transmission of the broadcast data, the broadcast information transmission unit transmits the changed information to a server in the P2P network, and the broadcast data transmission unit transmits changed broadcast data to the peers in the P2P network according to the changed information, and
the server transmits the changed information to the peers in the P2P network.

13. An apparatus for allowing a first peer to receive broadcast data via a peer-to-peer (P2P) network, the apparatus comprising:
a broadcast information receiving unit receiving information regarding a broadcast channel of a second peer from a server in the P2P network; and
a broadcast data receiving unit receiving the broadcast data of the broadcast channel from peers in the P2P network according to the information regarding the broadcast channel,
wherein the information regarding the broadcast channel comprises information regarding a list of a plurality of pieces of broadcast content broadcast via the broadcast channel.

14. The apparatus of claim 13, wherein the information regarding the list of the plurality of pieces of broadcast content comprises information regarding a broadcast schedule of the plurality of pieces of the broadcast content.

15. The apparatus of claim 13, wherein the broadcast information receiving unit receives changed information regarding the broadcast channel, the changed information being generated during the receiving of the broadcast data, from the server,
the broadcast data receiving unit receives changed broadcast data from the peers in the P2P network according to the changed information regarding the broadcast channel, and
the changed information is transmitted from the second peer to the server.
